# EUROPEAN PATENT APPLICATION

(11) **EP 3 042 881 A1**
(43) Date of publication of application: **13.07.2016**
(21) Application number: 15202859.3
(22) Date of filing: 29.12.2015
(51) Int. Cl.: C03B 27/04, C03B 27/044

(54) **GLASS TEMPERING METHOD AND APPARATUS**

(30) Priority: 07.01.2015 FI 20150002
(71) Applicant: Feracitas Oy, 33720 Tampere (FI)
(72) Inventor: Nikander, Risto, 33720 Tampere (FI)
(74) Representative: Kolster Oy Ab

(57) **Abstract**

Tempering section of a flat glass tempering machine saves energy and reduces peak power by shutting an area of tempering section in the areas where there is no glass. The tempering section is multipurpose so that the first part can be used as a high pressure section for tempering thin glasses, latter section being after the cooling section. Further, the high pressure section can use air produced by a blower and/or compressor.

The tempering section includes rollers transporting glass, upper and lower pressure chambers, nozzle boxes attached to them, nozzle covers with nozzles and necessary shutting devices and internal walls.

## Description

The invention is related to the tempering section of a flat glass tempering furnace, in which the glass is oscillated on rollers. Nozzle boxes, from which jets of air are blown onto the glass are parallel to the rollers.

### BACKGROUND OF THE INVENTION

It is well known that the tempering machine loading efficiency in average is no more than about 65% of the maximum loading area. The reason for this waste area is, of course, that glass sizes vary and whole tempering section loading area cannot be utilized. That means high waste of energy and also unnecessarily high peak power.

A standard practice is that tempering blower blows air into a so-called pressure equalization tank, which is as long as tempering section. The air pressure is stabilized in the tank essentially onto the static pressure. From the tank air is passed through hoses, nozzle boxes and nozzles onto the glass. The nozzles cover the entire surface area of the tempering section. Tempering section energy consumption and the need for peak power is always according to the whole tempering section area and as required for each glass thickness. All of these devices, the fan, the pressure equalization tank, hoses, and tempering section are generally on floor level. They therefore require quite a wide floor area. A separate pressure equalization tank, hoses and nozzle boxes also cause pressure losses.

Peak power demand is known to be reduced by e.g. in such a way that air is blown only to the first half of the tempering section. In this area especially thin glasses are tempered, because they require a high tempering pressure. Also other more complex peak power reduction methods have been developed, such as e.g. Finnish patent FI 100525 B. However, even for these the problem is that the tempering area is of fixed size. They are not adjustable according to the use of the machine. The waste area of 35 per cent, therefore, remains the same. In particular, the width of the tempering area is not adjustable by known methods. Especially the tempering width should be adjusted, because the tempering length is approximately 2.5 times the width, so the energy saving potential for the width is 2,5 times higher than for the length.

### IMPROVED INNOVATIVE METHOD

This innovative solution substantially improves the effective loading area percentage reducing the blowing area of the glass tempering and / or the cooling zone when the entire loading area cannot be filled quite completely. The invention reduces the energy consumption and the peak power in the same proportion as the blowing area can be closed. The invention also discloses novel, advantageous and low-cost ways to achieve these objectives. The method according to the invention is characterized by what is presented in the patent claims.

### BRIEF DESCRIPTION OF THE DRAWINGS

In the following the invention will be described in greater detail by means of preferred embodiments with reference to the accompanying drawings, in which
Figure 1 is a schematic top (or bottom) view of a glass tempering or tempering and cooling area,
Figure 2 is a schematic side view of an end part of a tempering section,
Figure 3 schematically shows a first embodiment relating to Figure 2,
Figure 4 schematically shows a second embodiment relating to Figure 2,
Figure 5 schematically shows a third embodiment relating to Figure 2 and
Figure 6 is a schematic side view of a tempering section.

### DETAILED DESCRIPTION OF THE INVENTION

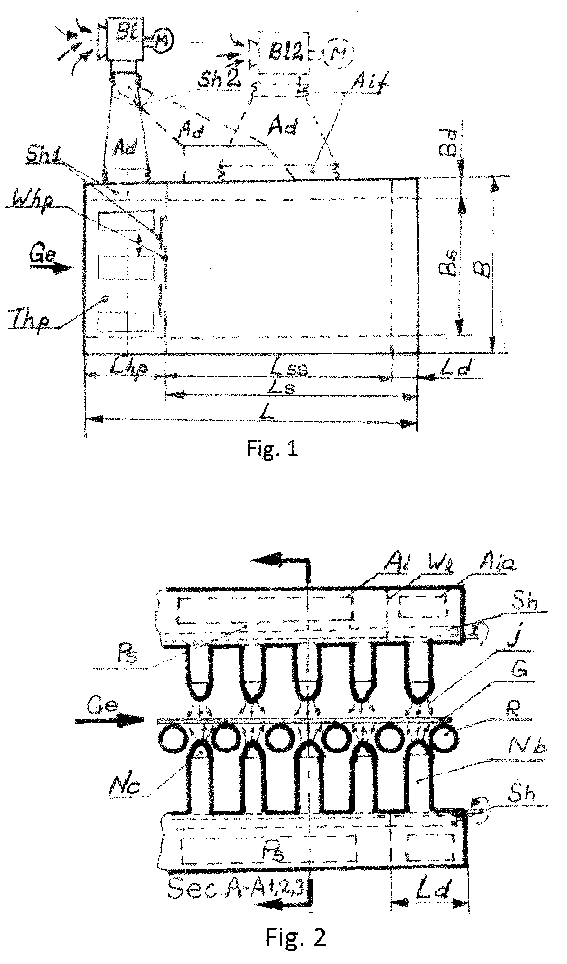

Fig. 1 illustrates a glass tempering or tempering and cooling area seen from the top (or bottom). Glass enters into the tempering section from direction Ge. The total area is the W x L = A. The air entrances into the nozzle boxes can be closed in the width direction in the area 2 x Bd x L thus saving tempering or cooling energy and peak power accordingly. It is also possible to shut down the length of the nozzle boxes from one side only, thus saving half of the energy, in the area of Bd x L.

In the length direction it is possible to build a wall, where the last nozzle boxes of the tempering section are isolated from the rest of tempering section, in which case the glass loading area can be shortened by the length of Ld.

The rest of the drawing describes the multi-purpose way to improve the tempering section. A known method is to make so-called "by pass" tempering section for thin glass, which is a high pressure part about 1.5 m long (Lhp), followed by a cooling section, which is specially designed for glass cooling. They often have their own fans. The patent application FI20030942 describes an alternative where a single fan is used in both sections. However, the tempering section of FI20030942 is not multi-purpose, since the cooling section is specifically designed for cooling only. In contrast, Fig. 1 illustrates a multi-function tempering section, because all nozzle boxes are at the same distance from each other and also nozzles have the same C-C distances. High pressure area is Thp, (Lhp x B or Lhp x Bs). The air from fan Bl or fans Bl nd BL 2 is led mainly into the high pressure area Thp by damper / or dampers Sh1 Sh2 where it tempers the glass, but part of the air is passed to second section to the length Ls or Lss, where it cools the glass. When the glass load has passed through the Thp section and thus has been tempered, the total air delivery of the fan(s) can be directed into the cooling section lengths Ls or Lss.

When tempering thicker glasses, it is possible to use for tempering and after-cooling lengths L and Lhp + Lss.

The air supply ducts Ad of drawing 1 are attached to the fan(s) Bl, (BL2), and the feed openings of pressure equalization chamber Ps with flexible joints Aif. Below Ps will simply be referred to as pressure chamber. The joints are also shown in Figure 2, section A-A3. The design allows the distance adjustment of the top and the bottom nozzles to the glass as required by the thickness of the glass tempered. It also allows the upper and lower portions of the tempering section to "yawn", that means driving the nozzles up and down for broken glass removal and maintenance. Air supply to the pressure chambers Bs can be taken, except for the side, also from the top and bottom in which case flexible connection Aif should be axial.

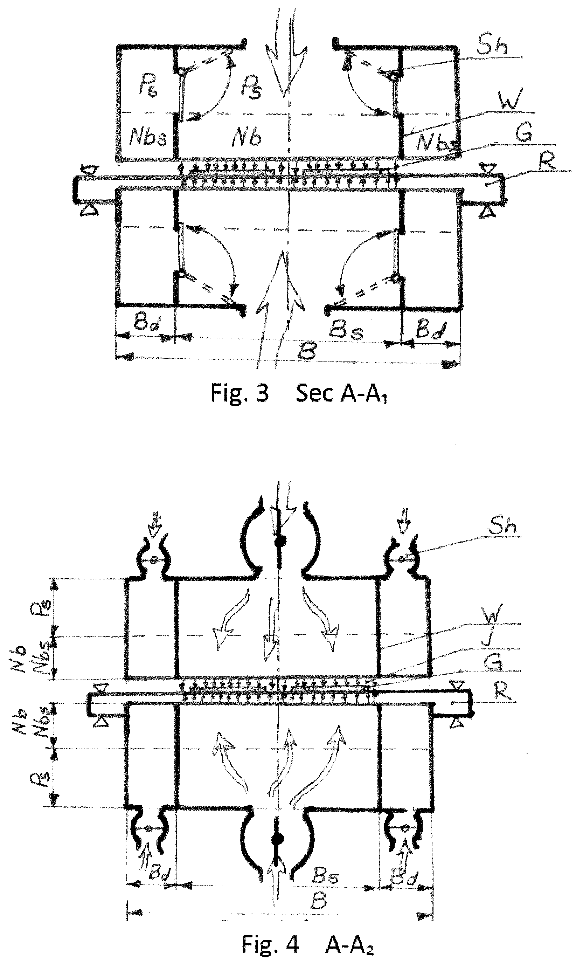

Fig. 2 is the tempering section side view, especially its end part. Glass G enters into the tempering section carried by rollers R from Ge direction. Air from the fan(s) is blown through duct(s) and opening(s) Ai into the pressure chambers Ps, from where it proceeds to the nozzle boxes Nb, and further to the nozzles, which are machined nozzle covers, Nc. From the nozzles air jets J discharged onto the glass. The AA-sections 1,2,3 of drawing 2 show how the tempering and / or cooling zones may be split to areas, into which air flow can be closed (Figures 3, 4 and 5). The easiest way to accomplish this is by building air tight dividing walls W into the nozzle boxes. In this way the ends of the nozzle boxes can be separated by the dividing walls from the center of the nozzle boxes. Shut-off device Sh can be used to close the air entering the into the ends of nozzle boxes and nozzles at the length of Bd. In all sections A-A the tempering width is reduced from dimension B to dimension Bs. The number of walls W may be increased, in which case it would be possible increase number of tempering areas and reduce blowing onto unnecessary area. Shutting devices can be various designs, sliding, pivoting, etc.

Item WI is a dividing wall which separates the end of the tempering section (pressure chamber Ps and the nozzle boxes Nb) into an independent section. Aia is air inlet opening with shutting device for this section. The shutting device may optionally be in the wall Wl.

By building pressure chambers Ps together with the nozzle boxes Nb, a separate pressure equalizing tank between the fan / fans and tempering section can be eliminated. Elimination of a separate tank and hoses also reduces pressure losses.

The heights of the nozzle boxes are increased from the center of the tempering section towards the sides. This improves the air escape from the tempering section. Also the glass, which sometimes breaks in the tempering section, is easier to remove. The air supply openings Ai and Aia and shutter devise Sh may also be located above and below.

Sections A-A1 and A-A2 illustrate how the pressure chamber Ps can be divided into separate parts. The access of the air can be prevented into the nozzle boxes in area marked by Nbs by shutting devices Sh. In section A-A3 pressure chamber is common for all nozzle boxes to the width B and shut-off device Sh closes the air from entering into the nozzle boxes at the width of Bd.

The loading conveyor of the tempering machine must be marked for the areas corresponding to the selection of the smaller tempering areas as used for each case. If desired, there is also possibility to build automation for this part.

The walls W needed are not just a cost burden, because they also bind the nozzle box walls together and prevent nozzle box walls from bulging outwards due to the air pressure. Building the pressure chamber together with the nozzle boxes also saves factory space and reduces manufacturing and transport expenses.

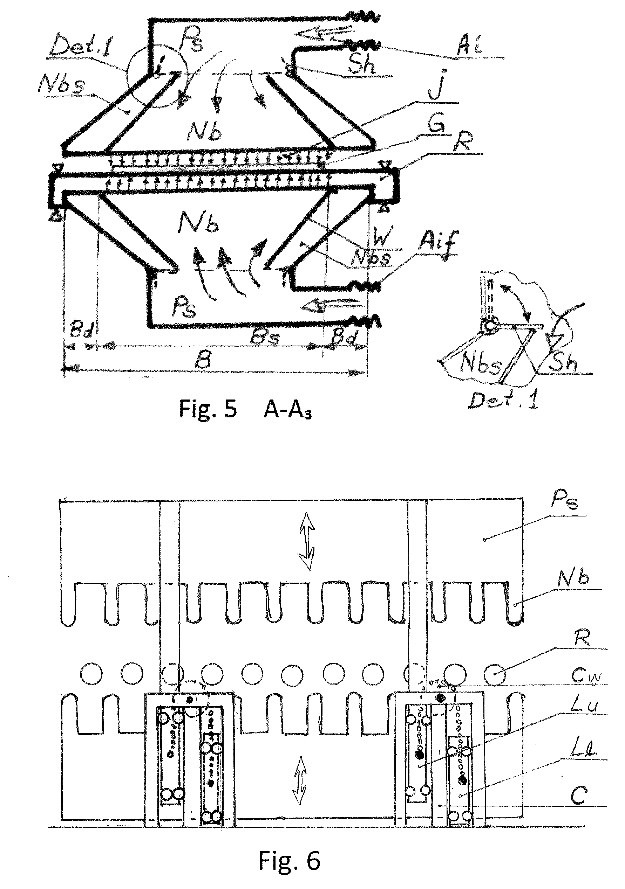

Fig. 6 illustrates a complete tempering section. Pressure chambers Ps are "self- supporting" because of box design. By erecting columns C on the floor it is possible to design guiding devices for upper Lu and lower Ll tempering sections. Guiding devices can be rolls, slides or similar. Any types of drives, Cw, (screws, chain wheels etc.) can move guiding devices and consequently upper and lower tempering sections up and down. Fig 6 shows service position. This design would avoid overhead lifting devices and further reduce use of manufacturing material and labor as well as transportation space from the manufacturer to the erection site.

## Claims

1. A tempering section of a flat glass tempering furnace, which tempering section comprises rollers for oscillating the glass to be tempered, at least one pressure chamber where tempering air is guided, nozzle boxes parallel to the rollers and attached to the pressure chamber and nozzles at the ends of the nozzle boxes through which nozzles air is blown against the glass, whereby at least some of the nozzle boxes are provided with dividing walls each dividing wall separating an end of the nozzle box from the center of the nozzle box, the tempering section further comprising shutting devices for preventing the tempering air from entering into the ends of the nozzle boxes thereby reducing the width of the tempering area of the tempering section.

2. A tempering section as claimed in claim 1, wherein the front end of the pressure chamber (Ps) is provided with a wall (Whp) dividing a high pressure area (Thp) from the rest of the pressure chamber (Ps) the wall comprising at least one shutting device.

3. A tempering section as claimed in claim 1 or 2, wherein the tempering section comprises means for guiding compressor air at least to a part of the tempering section.

4. A tempering section as claimed in any one of the preceding claims, wherein the back end of the pressure chamber comprises a wall for preventing air from entering to the last nozzle boxes whereby the tempering section further comprises shutting devices allowing and preventing the air from entering the last nozzle boxes as per need.

5. A tempering section as claimed in any one of the preceding claims, wherein the tempering section comprises vertical columns for supporting the pressure chamber, the lower parts of the columns being provided with guiding devices and drives for moving the guiding devices.

6. A method for tempering flat glass, the method comprising oscillating the glass by rollers and blowing air against the glass through a pressure chamber and nozzle boxes attached to the pressure chamber the nozzle boxes being parallel to the rollers, whereby at least some of the nozzle boxes are provided with dividing walls each dividing wall separating an end of the nozzle box from the center of the nozzle box, the method further comprising reducing the width of the tempering area by preventing the air from entering into the ends of the nozzle boxes.
